# FASCICULE DE BREVET EUROPEEN

(11) **EP 0 779 635 B1**
(45) Date de publication et mention de la délivrance du brevet: **23.04.2003**
(21) Numéro de dépôt: 96410115.8
(22) Date de dépôt: 20.11.1996
(51) Int. Cl.: H01G 2/14

(54) **Condensateur de puissance**
Leistungskondensator
Power capacitor

(30) Priorité: 14.12.1995 FR 9515199
(43) Date de publication de la demande: 18.06.1997
(73) Titulaire: Schneider Electric Industries SAS, 92500 Rueil-Malmaison (FR)
(72) Inventeur: Sebillotte, Eric, 38050 Grenoble Cedex 09 (FR); Ducrettet, Patrick, 38050 Grenoble Cedex 09 (FR); Francisco, Stéphane, 38050 Grenoble Cedex 09 (FR); Albert Gondrand, Jean-Louis, 38050 Grenoble Cedex 09 (FR)
(74) Mandataire: Jouvray, Marie-Andrée

(56) Documents cités:
- EP-A- 0 530 115
- GB-A- 2 089 127
- PATENT ABSTRACTS OF JAPAN vol. 14, no. 239 (E-0930), 21 Mai 1990 & JP 02 065205 A (HITACHI CONDENSER CO LTD), 5 Mars 1990,
- PATENT ABSTRACTS OF JAPAN vol. 14, no. 562 (C-0788), 13 Décembre 1990 & JP 02 242959 A (KURARAY CO LTD), 27 Septembre 1990,

## Description

L'invention concerne un condensateur de puissance comportant au moins un élément capacitif enrobé dans une résine polymérisable et disposé dans un boîtier, condensateur comportant des zones de passage privilégié pour des gaz émis en cas de défaut dans l'élément capacitif, lesdites zones étant normalement fermées par des éléments étanches à la résine.

Classiquement, un condensateur de puissance comporte un ou plusieurs éléments capacitifs élémentaires disposés dans un boîtier. Chaque élément est constitué par un enroulement ou un empilage réalisant l'alternance entre une couche électriquement isolante et une couche électriquement conductrice. La couche isolante est, de préférence, constituée d'un ou de plusieurs films plastiques et la couche conductrice d'un film métallique ou d'un dépôt métallique sur un film plastique.

Pour assurer la tenue mécanique de l'élément capacitif et pour le protéger contre les agressions du milieu environnant, par exemple contre l'humidité, il est classique d'enrober l'élément capacitif dans une résine polymérisable. L'enrobage est avantageusement réalisé par coulée de la résine dans un espace libre situé entre l'élément capacitif et le boîtier.

Lorsqu'un tel élément capacitif, à la suite du claquage diélectrique de l'isolant, se met en court-circuit, un grand volume de gaz est produit, ce qui se traduit par une augmentation de pression pouvant conduire à l'explosion du boîtier de l'élément capacitif et du condensateur associé.

Pour éviter ce phénomène d'explosion, certains condensateurs sont équipés d'un système de déconnexion électrique agissant sous l'effet d'une augmentation de pression.

Pour améliorer l'efficacité du système de déconnexion à surpression, il est souhaitable de faciliter le cheminement des gaz en direction de ce système, notamment depuis l'extrémité de l'élément capacitif opposée à l'organe du système qui est sensible à la surpression.

Le document GB-B-2.089.127, par exemple, décrit deux modes de réalisation particuliers d'un condensateur comportant des passages privilégiés pour les gaz en direction du système de surpression.

Dans le premier mode de réalisation, une mousse à cellules fermées est disposée autour d'un enroulement capacitif, entre celui-ci et le boîtier. Lorsque la résine est coulée dans le boîtier, elle ne peut pénétrer dans la zone occupée par la mousse. En cas de défaut, la pression des gaz provoque une déformation de la mousse, créant ainsi un passage pour les gaz le long de l'élément capacitif. Lorsque la température des gaz est élevée, la chaleur provoque, de plus, la fusion de la mousse, accentuant ainsi sa déformation et améliorant le passage des gaz. Ce mode de réalisation présente deux inconvénients. Tout d'abord, la mise en place de la mousse est complexe et se traduit par un surcoût. De plus, l'efficacité du cheminement des gaz dépend de leur température.

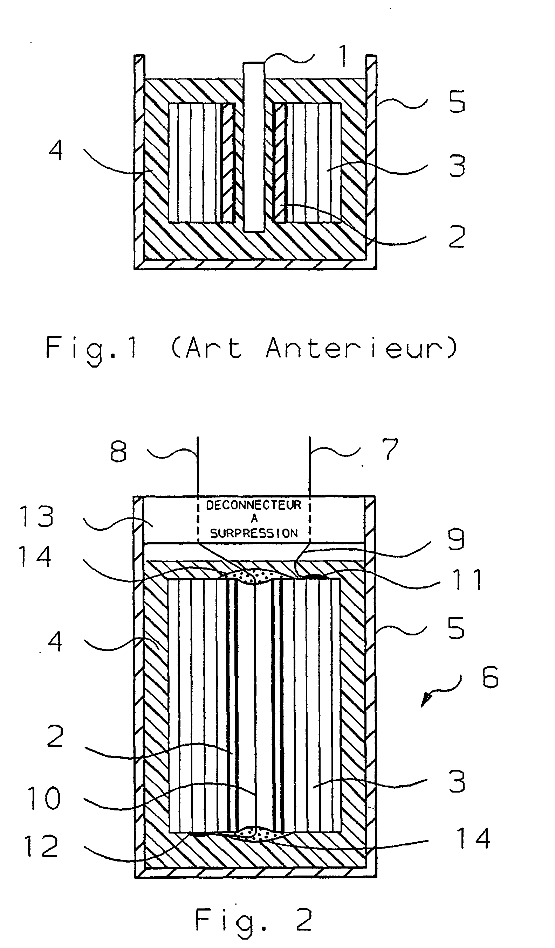

Dans un second mode de réalisation, représenté à la figure 1, le passage pour les gaz est constitué par un fin tube creux 1, en polyéthylène, disposé à l'intérieur du noyau creux 2 d'un élément capacitif 3 et fermé à ses extrémités. De la résine 4, coulée dans le boîtier 5, enrobe l'élément capacitif 3, sans pénétrer à l'intérieur du tube 1 qui délimite ainsi un passage préférentiel pour les gaz à travers la résine. En cas de défaut, l'élévation de pression et de température entraîne la rupture des extrémités du tube, facilitant ainsi le passage des gaz en direction d'un dispositif de surpression (non représenté). Ici aussi l'efficacité du cheminement des gaz dépend de leur pression et de leur température, le passage n'étant pas perméable au gaz dans toutes les conditions de température.

Le document FR-A-2.635.609 décrit le dépôt d'une pellicule de diélectrique pâteux autour d'un élément capacitif cylindrique avant coulée de résine dans le boîtier, de manière à former des passages privilégiés pour les gaz entre la résine et la face latérale périphérique de l'élément capacitif. Le diélectrique pâteux est, de préférence, une graisse au silicone, qui possède de bonnes propriétés de stabilité chimique et physique dans le temps, mais dont le coût est élevé. Par ailleurs, le dépôt dans les zones choisies pour le cheminement préférentiel des gaz est compliqué par le caractère pâteux et collant du matériau.

Le but de l'invention est de réaliser un condensateur permettant, en cas de défaut, un cheminement des gaz dans des zones prédéterminées et ne présentant pas les inconvénients des dispositifs connus.

Selon l'invention, ce but est atteint par un condensateur défini par les caractéristiques de la revendications 1.

Selon un mode de réalisation préférentiel l'élément capacitif étant formé par bobinage de films, alternativement isolant et conducteur, autour d'un noyau creux, les éléments étanches à la résine constituent des bouchons aux extrémités du noyau creux qui forme la zone de passage privilégié des gaz.

Le matériau est, de préférence, un matériau adhésif thermofusible, déposé par projection au moyen d'un pistolet de fibérisation.

L'épaisseur des éléments étanches à la résine est, de préférence, comprise entre 0,1 et 10 mm.

D'autres caractéristiques et les avantages qui en découlent ressortiront plus clairement de la description suivante de différents modes de réalisation, donnés à titre d'exemples non limitatifs et représentés aux dessins annexés dans lesquels :
La figure 1 représente, en coupe, une partie d'un condensateur selon l'art antérieur.
Les figures 2 et 4 représentent deux modes de réalisation d'un condensateur selon l'invention, comportant respectivement un élément capacitif et plusieurs éléments capacitifs.
La figure 3 illustre, de manière schématique, le dépôt du matériau fibérisé à l'aide d'un pistolet de fibérisation.

Sur la figure 2, le condensateur de puissance 6 comporte un seul élément capacitif 3, réalisé de manière connue, par bobinage, sur un noyau creux 2, d'une alternance de couches électriquement isolantes et de couches électriquement conductrices. Les bornes 7 et 8 de sortie du condensateur sont respectivement connectées par des conducteurs 9 et 10 à des électrodes 11 et 12 situés respectivement sur les faces supérieure et inférieure du bobinage. Le conducteur 10 traverse de part en part le noyau creux 2 du bobinage. Un déconnecteur à surpression 13 est disposé à la partie supérieure du boîtier 5. En cas de défaut, le gaz s'accumule dans le boîtier et lorsque la pression dépasse un certain seuil, le déconnecteur 13 interrompt l'alimentation électrique du bobinage. Le déconnecteur à surpression peut être de tout type connu.

Le noyau creux est utilisé pour faciliter le cheminement des gaz formés à la partie inférieure du bobinage. Pour éviter le remplissage du noyau par la résine d'enrobage lors de la coulée de celle-ci dans le boîtier, les extrémités du noyau creux 2 sont obstruées par des éléments 14 étanches à la résine, mais perméables aux gaz, quelles que soient la température et la pression de ceux-ci. Les éléments 14 forment en quelque sorte des bouchons aux extrémités du noyau creux, empêchant la pénétration de la résine dans le noyau, tout en permettant le passage et le cheminement de gaz dans le noyau et vers le déconnecteur à surpression 13. Les éléments 14 permettent également le passage du conducteur 10.

Les éléments 14 sont constitués par la superposition et l'enchevêtrement de fibres en matière plastique thermofusible. Le matériau utilisé est de préférence un adhésif thermofusible fibérisé. A titre d'exemple, on peut utiliser le butadiène styrène, le néoprène styrène, l'éthylène vinyle acétate, le vinylacétate/vinylester, les polyamides ou les polyesters. Suivant un mode préférentiel de réalisation de la présente invention, les fibres sont en éthylène vinyle acétate (EVA), ont un diamètre compris entre 5 et 50 µm et une longueur comprise entre 10 et 100 mm. L'épaisseur du bouchon ainsi constitué est comprise entre 0,1 et 10 mm. Les bouchons ainsi constitués tout en empêchant la résine d'enrobage de remplir le noyau creux, sont perméables aux gaz.

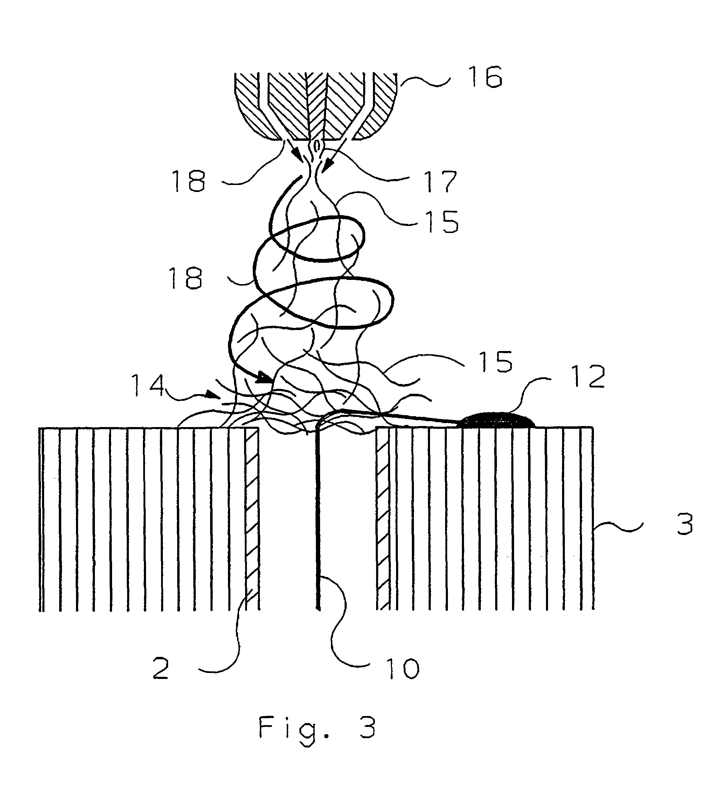

Un mode préférentiel de réalisation des éléments 14 est représenté à la figure 3. Sur la figure 3 est représenté la réalisation de l'élément 14 déposé à l'extrémité inférieure de l'élément capacitif 3. Le conducteur 10 est au préalable mis en place à l'intérieur du noyau 2 et connecté à l'électrode 12. L'élément 14 est formé par projection de fibres 15 sur l'extrémité du noyau. Cette projection est de préférence obtenue au moyen d'un pistolet de fibérisation 16. Dans un tel pistolet, la matière plastique thermofusible à l'état fondu 17 passe dans un jet d'air tourbillonnant 18 qui pulvérise la matière en formant des fibres, qui enchevêtre les fibres entre elles, les transporte et les entasse en un emplacement prédéterminée, sur l'extrémité du noyau creux 2 sur la figure 3. Bien entendu, la longueur des fibres doit être adaptée au diamètre du noyau, de manière à ce que les fibres se déposent à l'emplacement désiré, à l'extrémité du noyau. Des pistolets de ce type sont connus et disponibles commercialement et ne seront donc pas décrits plus en détail.

En intervenant sur des paramètres facilement modifiables tels que la température de la matière thermofusible à l'état fondu, la pression et le débit d'air, les caractéristiques géométriques de la buse de pulvérisation, la distance buse-extrémité du noyau creux, on règle très facilement les caractéristiques des fibres (longueur, diamètre, enchevêtrement) et du dépôt (forme, compacité), de façon à obtenir les performances recherchées d'étanchéité à la résine d'enrobage et de perméabilité aux gaz.

Pour fabriquer le condensateur représenté à la figure 2, le conducteur 10 est introduit dans le noyau creux 2 de l'élément capacitif 3 et une de ses extrémités soudée sur l'électrode 12 à la face inférieure de l'élément capacitif. Puis les éléments 14 sont formés par fibérisation. L'élément capacitif, dont le noyau creux est ainsi fermé, est placé dans le boîtier 5. La résine 4 est coulée dans l'espace libre laissé dans le boîtier, de manière à enrober l'élément capacitif 3. La résine 4 est une résine polymérisable, qui a de préférence une viscosité comprise entre 500 et 1500 centipoises.

A la partie supérieure, la couche de résine au dessus de l'élément 14 est, de préférence, mince, de manière à se rompre facilement sous l'effet de la pression des gaz accumulés dans le noyau creux.

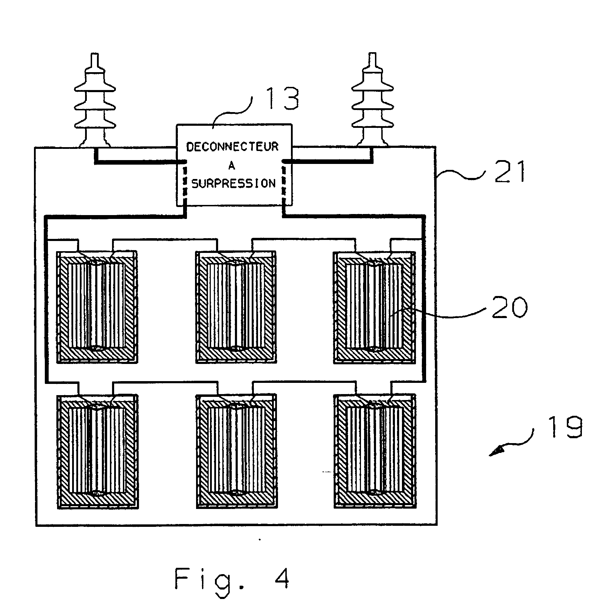

Le condensateur 19 représenté à la figure 4, comporte une pluralité d'éléments de condensateurs élémentaires 20. A titre d'exemple, sur la figure 4, un premier groupe de 3 éléments 20 connectés en série est connecté en parallèle avec un second groupe de 3 éléments 20 connectés en série. Chaque élément 20 est formé comme décrit précédemment en regard de la figure 2. Seul le déconnecteur à surpression est omis. L'ensemble des éléments 20 est disposé dans un boîtier 21 qui peut comporter un seul déconnecteur à surpression 13 pour le condensateur 19. Ainsi, si l'un des éléments 20 est en défaut, conduisant à un dégagement excessif de gaz, celui-ci chemine vers l'extérieur de l'élément 20 considéré, en utilisant éventuellement le noyau creux correspondant, et se répand dans l'espace laissé libre dans le boîtier 21. En l'absence de déconnecteur à surpression, une certaine sécurité est ainsi assurée, le dégagement devant être très important pour entraîner une surpression dangereuse si le volume libre est important. La présence du déconnecteur à surpression 13 permet de garantir la sécurité dans tous les cas.

Bien que l'invention ait été décrite en prenant pour exemple un bobinage monophasé, elle n'est pas limitée à ce type de condensateur. Le bobinage ou le condensateur peuvent également être de type triphasé ou multiphasé. Les éléments 14, étanches à la résine et perméables aux gaz, peuvent être disposés à tout emplacement permettant de fermer à la résine l'entrée d'une zone destinée à former un passage privilégié pour les gaz à l'intérieur du boîtier du condensateur. Les éléments 14 peuvent également être élaborés, par exemple, sous forme de nappe à découper, ou de pastilles, préalablement à leur mise en place.

## Revendications

1. Condensateur de puissance comportant au moins un élément capacitif (3) enrobé dans une résine polymérisable (4) et disposé dans un boîtier (5), condensateur comportant des zones de passage privilégié pour des gaz émis en cas de défaut dans l'élément capacitif, lesdites zones étant normalement fermées par des éléments (14) étanches à la résine, condensateur **caractérisé en ce que** les éléments (14) étanches à la résine sont en un matériau étanche à la résine et perméable aux gaz, constitué par la superposition et l'enchevêtrement de fibres (15) en matière plastique thermofusible.

2. Condensateur selon la revendication 1, **caractérisé en ce que**, l'élément capacitif (3) étant formé par bobinage de couches, alternativement isolante et conductrice, autour d'un noyau creux (2), les éléments (14) étanches à la résine constituent des bouchons aux extrémités du noyau creux (2) qui forme la zone de passage privilégié des gaz.

3. Condensateur selon l'une des revendications 1 et 2, **caractérisé en ce que** le matériau des éléments (14) étanches à la résine est un matériau adhésif thermofusible.

4. Condensateur selon l'une quelconque des revendications 1 à 3, **caractérisé en ce que** l'épaisseur des éléments (14) étanches à la résine est comprise entre 0,1 et 10 mm

5. Condensateur selon l'une quelconque des revendications 1 à 4, **caractérisé en ce que** les éléments (14) étanches à la résine comportent des fibres (15) ayant un diamètre compris entre 5 et 50 µm et une longueur comprise entre 10 et 100 mm.

6. Condensateur selon l'une quelconque des revendications 1 à 5, **caractérisé en ce que** le matériau est de l'éthylène vinyle acétate.

7. Condensateur selon l'une quelconque des revendications 1 à 6, **caractérisé en ce que** le matériau est déposé par projection après fibérisation.

8. Condensateur selon la revendication 7, **caractérisé en ce que** le matériau est déposé à l'aide d'un pistolet de fibérisation (16).

## Patentansprüche

1. Leistungskondensator mit mindestens einem, von einem polymerisierbaren Harz (4) umhüllten und in einem Gehäuse (5) angeordneten Kondensatorelement (3), welcher Kondensator Sollströmungswege für die bei Auftreten eines Fehlers im Kondensatorelement abgeschiedenen Gase aufweist, wobei die genannten Strömungswege im Normalbetrieb durch für das Harz undurchlässige Mittel verschlossen sind, **dadurch gekennzeichnet, daß** die für das Harz undurchlässigen Mittel (14) aus einem Material bestehen, das gegenüber dem Harz undurchlässig, gegenüber den Gasen jedoch durchlässig ist und durch Aufeinanderschichtung und Verschlingung von Fasern (15) eines thermoplastischen Kunststoffs gebildet wird.

2. Kondensator nach Anspruch 1, **dadurch gekennzeichnet, daß** das Kondensatorelement (3) als um einen Hohlkern (2) gerollter Rundwickel mit abwechselnd isolierenden und leitenden Schichten ausgebildet ist, wobei die für das Harz undurchlässigen Mittel Stopfen an den Enden des Hohlkerns (2) bilden, der den Sollströmungsweg der Gase darstellt.

3. Kondensator nach einem der Ansprüche 1 und 2, **dadurch gekennzeichnet, daß** das Material der für das Harz undurchlässigen Mittel (14) ein Schmelzklebstoff ist.

4. Kondensator nach irgendeinem der Ansprüche 1 bis 3, **dadurch gekennzeichnet, daß** die Dicke der für das Harz undurchlässigen Mittel (14) zwischen 0,1 und 10 mm beträgt.

5. Kondensator nach irgendeinem der Ansprüche 1 bis 3, **dadurch gekennzeichnet, daß** die für das Harz undurchlässigen Mittel (14) Fasern (15) aufweisen, deren Durchmesser zwischen 5 und 50 um und deren Länge zwischen 10 und 100 mm beträgt.

6. Kondensator nach irgendeinem der Ansprüche 1 bis 5, **dadurch gekennzeichnet, daß** das Material Ethylen-Vinylacetat ist.

7. Kondensator nach irgendeinem der Ansprüche 1 bis 6, **dadurch gekennzeichnet, daß** das Material nach der Zerfaserung durch Aufspritzen aufgebracht wird.

8. Kondensator nach Anspruch 7, **dadurch gekennzeichnet, daß** das Material mit Hilfe einer Zerfaserungs-Spritzpistole (16) aufgebracht wird.

## Claims

1. A power capacitor comprising at least one capacitive element (3) coated in a polymerisable resin (4) and arranged in a casing (5), a capacitor comprising zones for privileged flow of gases emitted in the event of a fault in the capacitive element, said zones being normally closed by elements (14) that are impervious to resin, capacitor **characterized in that** the elements (14) impervious to resin are made of a material that is impervious to resin and permeable to gases, constituted by superposition and entanglement of fibres (15) made of thermofusible plastic material.

2. The capacitor according to claim 1, **characterized in that**, the capacitive element (3) being formed by coiling of alternately insulating and conducting films around a hollow core (2), the elements (14) impervious to resin form plugs at the ends of the hollow core (2) which forms the zone for privileged flow of the gases.

3. The capacitor according to one of the claims 1 and 2, **characterized in that** the material of the elements (14) impervious to resin is a thermofusible adhesive material.

4. The capacitor according to any one of the claims 1 to 3, **characterized in that** the thickness of the elements (14) impervious to resin is comprised between 0.1 and 10 mm.

5. The capacitor according to any one of the claims 1 to 4, **characterized in that** the elements (14) impervious to resin comprise fibres (15) having a diameter comprised between 5 and 50 µm and a length comprised between 10 and 100 mm

6. The capacitor according to any one of the claims 1 to 5, **characterized in that** the material is ethylene vinyl acetate.

7. The capacitor according to any one of the claims 1 to 6, **characterized in that** the material is deposited by projection after fiberisation.

8. The capacitor according to claim 7, **characterized in that** the material is deposited by means of a fiberising gun (16).
